# EUROPEAN PATENT SPECIFICATION

(11) **EP 0 670 660 B1**
(45) Date of publication and mention of the grant of the patent: **19.06.2002**
(21) Application number: 95103159.0
(22) Date of filing: 06.03.1995
(51) Int. Cl.: H04N 7/087, H04N 7/088

(54) **A teletext decoder**
Teletext-Decoder
Décodeur de télétexte

(30) Priority: 04.03.1994 DE 4407237
(43) Date of publication of application: 06.09.1995
(73) Proprietor: TEXAS INSTRUMENTS INCORPORATED, Dallas, Texas 75243 (US); TEXAS INSTRUMENTS DEUTSCHLAND GMBH, 85350 Freising (DE)
(72) Inventor: Fink, Helmut, D-85132 Schernfeld (DE)
(74) Representative: Holt, Michael

(56) References cited:
- EP-A- 0 578 300

## Description

The invention relates to a teletext decoder for the processing of teletext and subtitle information transmitted serially, in the vertical blanking interval in a television signal, in the form of pages to be displayed on a television screen, each transmitted page being composed of a header line with information concerning the type and number of the respective page and of a varying number of data lines, comprising a memory for the incoming information, a control unit to receive the incoming information and, dependent on the content of the header line to control the storage of the information belonging to a page in the memory.

Most advanced television receivers are fitted with a teletext decoder, with the aid of which the information transmitted in the vertical blanking intervals of the television signal may be displayed on the television receiver screen. This information may for instance be current daily news in the form of headlines, sporting news, weather reports and the like. A significant part of such information is however furthermore subtitle information which in the form of subtitle lines may be included in a television program being shown.

The structure of the transmitted information is defined in the "World Systems Teletext Specification", abbreviated as WST. In accordance with this Standard the information is transmitted in the form of pages, which comprise at the most 25 lines of 40 columns each. The line with the 0 is a special line, i. e. a so-called header line, which comprises information concerning the type and content of the following data lines of the page. The header for example comprises the number of the respective page and it is to be seen from the header line whether the page is a normal information page or a subtitle page. As specified in the said Standard the header line has three purposes:
a) it is to transmit an address (page number) so that the user, that is to say the television viewer, may select a particular teletext page.
b) it is to contain control information, which is necessary for the transmitted teletext page to be displayed on the picture screen in the manner intended by the producer of the page.
c) it is to mark the start of a new teletext page.

For number of different reasons it is however desirable to exactly recognize and to suitably mark the end of a transmitted page. The page acquiring circuitry comprised in a teletext decoder, which as desired by the viewer is responsible for storage of the teletext page to be displayed on the screen, cannot be reset for searching for another page as long as the current page is still in the process of being transmitted. Any premature resetting, that is to say prior to termination of the current page, would consequently lead to loss of data. Furthermore in the case of programming video-recorders with the aid of program information contained in certain teletext page, it is in each case necessary to await the complete transmission of a page; it is only then that the received page may be further processed.

However when the said Standard was drawn up, no mark was decided upon to indicate when the end of a transmitted page had been reached. Since a teletext page may have a varying number of lines, the end may not be unambiguously determined by simply counting the lines. Furthermore the reception of the header line does not represent a clear indication that the previously transmitted page has come to an end, since a header line, which belongs to a subtitle page, may interrupt a normal teletext page at any time even if all the pages thereof have not been transmitted. In fact a subtitle page is displayed, irrespectively of the content of a program to which the subtitle page belongs, in the serial sequence of teletext pages. A subtitle must be synchronously transmitted with the respective program content so that it is not possible to take into account the teletext transmission.

A further reason for not being able to interpret the reception of a header line as the end of the previously transmitted page, is that then in the case of a state of the art teletext transmission method two header lines are transmitted immediately one after the other, that is to say the header line of the next page to be transmitted and the header line of the next page following this page. This method, termed in the literature "page advanced header" (PAH) has the purpose of giving an early warning to the teletext decoder that a further page is on the way so that preparations for such page may be made even before the first lines of such page have been transmitted. Such preparations may inter alia contain an allocation of memory capacity for the new page which is to arrive.

Owing to the provisions of the Standard marking of the end of a page by a special control bit is impossible. In fact for the header line only 10 bits are available, which are already reserved for specific tasks. Furthermore it is not possible to provide the last line of a page with a special marking, since such marking might in some cases cause a visible display on the television screen. The addition of a special line marking the end of a page would increase the amount of data to be transmitted per page, and furthermore the transmission time, in an unacceptable fashion.

Published European Patent Document No. 0,578,300 A2 teaches that it is possible for the teletext decoder to search and display teletext subtitling page in response to a user controlled display command. This document further discloses the provision of a non-volatile memory for storing additional subtitling pages that may be subsequently requested by user initiation of a request command.

One object of the present invention is to provide a teletext decoder of the sort noted initially which renders it possible to produce a cue indicating the end of a transmitted page.
In order to achieve this object the invention provides for storage of page numbers by an additional memory, the control unit being so designed that on recognizing a page as a subtitle page the storage of the previously received page number is caused to take place in the additional memory and a previously received page is marked as being terminated, if the last received page is not a subtitle page and the additional memory is not storing a valid page number or a page number differing from the last received page number.

In the teletext decoder in accordance with the invention the special design renders possible a comparison of page and an evaluation of the additional information comprised in the header line to produce a cue with the aid of which a received page may be marked as being previously terminated.

One working embodiment of the invention will now be described with reference to the drawings.
- Figure 1: is a diagrammatic representation of the make-up of the serially transmitted information in four different cases A, B, C and D.
- Figure 2: is a diagrammatic representation of part of a teletext decoder in accordance with the invention, only those parts being illustrated which are necessary for an explanation of the invention.
- Figures 3A,: 3B and 3C show a flow chart to explain the manner of operation of the teletext decoder in accordance with the invention, figures 3A, 3B and 3C having to be so arranged as is indicated in figure A on the top right.
- Figure 4: shows a part of the flow chart of figure 3 indicating an operation taking place in the functional blocks A and B of figure 3B.

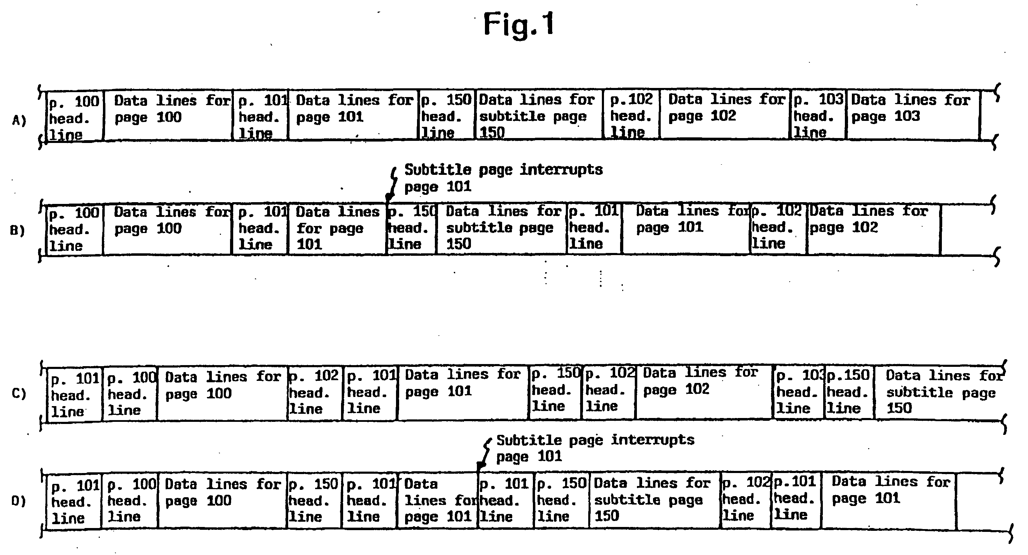

On the basis of figures 1A through 1D an explanation will first be provided of the form in which teletext and subtitle information is transmitted in the vertical blanking intervals in a television signal. The information is transmitted in sequential blocks, which are each termed a page. In this case a distinction is drawn between teletext pages and subtitle pages. Teletext pages comprise information, which is displayed over the full area of the picture screen, whereas subtitle pages contain information, which is can be displayed as subtitles in a current television program.

Each information page consists of a header line and of data lines following the header line, each page containing up to 25 lines in accordance with the said Standard in force. As shown in figure 1A, firstly the header line of page 100 is transmitted, which is followed by the data lines. The next block contains the header line of page 101 and following this the data lines for the page 101. In the case of figure 1A the data lines for page 101 are directly followed by a header line of page 150, which is to be a header line of a subtitle page. This header line is followed by the data lines for the subtitle page 150. In this respect it is assumed that the header line of page 150 is joined to the last data line of page 101 so that there has been no interruption of a teletext page. After the last data line for the subtitle line 150 the header line for page 102 is transmitted, which is then followed by the respective data lines. One after the other there then follow further teletext pages each with a respective header line and with the respective data lines.

Since the subtitle pages must be transmitted synchronously with a film being shown in television, it is not possible to take into account, when inserting the same into the sequence of teletext pages, whether a page has already been completely transmitted or not. Figure 1B shows the case in which a subtitle page interrupts a teletext page. In this respect it is assumed that when the header line of the subtitle page 101 is transmitted the data lines for the teletext page 101 have not yet been completely transmitted. This interruption means that the teletext decoder page 101 could not be completely displayed on the screen, if steps were not taken to see that after the end of the subtitle page the rest of the entire page 101 is transmitted as well. Since it is known at the transmitter that the subtitle page has interrupted the transmission of the previously interrupted teletext page, after the end of the subtitle page the transmission of the previously interrupted teletext page is resumed. For this purpose it is however necessary for the header line of the interrupted page to be repeated.

In figure 1C a further mode of transmission is depicted, which is termed the method with pre-header lines. This particular method of transmission means that prior to the transmission of the header line of a page currently to be transmitted the header line of the next page to be transmitted is transmitted. Once the data lines of the current page have been transmitted, the header line of the next but one page, and then the header line of the next page with the respective data are transmitted. This method offers the advantage that the decoder always knows in advance which page is to be transmitted as the next one. It is consequently possible to make sufficient memory capacity available by erasure of information no longer required in the decoder. The memory in the decoder is in fact not so large that the entire transmitted information can be constantly written into it and stored. Since erasure is relatively slow, the transmission operation is retarded, if the memory capacity always has to be made available after the end of a transmitted line by erasure. In the case of the transmission method in accordance with figure 1C the erasure operation and the preparation of the memory location for the next page may be performed during the reception and the storage of the current page so that in the teletext decoder processing time is economized in. Figure 1C shows that after the transmission of the header line for the page 101 the header line for the page 100 and following this the respective data lines are transmitted. Following this the header line of page 102, the header line of page 101 and the data lines belonging thereto are transmitted. Furthermore advance notice of a subtitle page, in the present example page 150, is given by transmission of the corresponding header line. as figure 1C shows. In the case of figure 1C there is during the transmission of the header line 150, no interruption of the transmission of a teletext page, since the header line of page 150 is only transmitted after the complete transmission of the data lines of page 101.

In the example of figure 1D, in the pre-header line method, the transmission of a data page is interrupted by a subtitle page. The interruption takes place at the point indicated by an arrow. It is to be seen here, like the case of figure 1B, that when there is an interruption, the header line of page 101 is transmitted, that is to say the header line of that page, which has been interrupted. Consequently in the case of there being an interruption the decoder is informed that the next page transmitted after the subtitle page is again page 101, which has been interrupted.

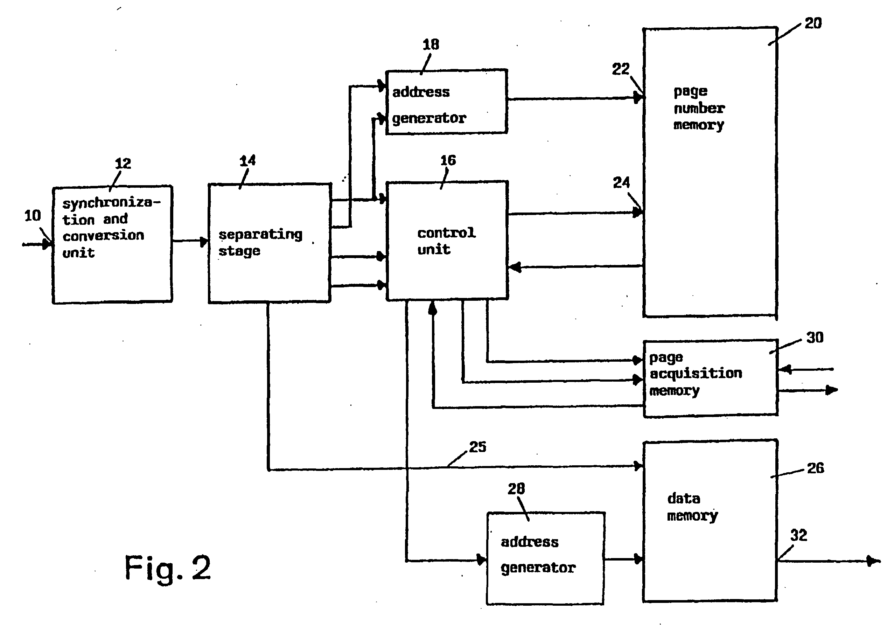

With reference to figure 2 the main parts of a teletext decoder will now be described which participate in the production of a page end cue.

The serially transmitted digital teletext data are supplied to an input 10 of a synchronizing and converting unit 12. A sync code comprised in the data flow is recognized by this synchronizing and converting unit 12 and processed for synchronization purposes. Furthermore the serially arriving bytes are converted into parallel bytes and passed on to a separating stage 14. In such separating stage the control information is separated from the actual teletext information, such control information comprising inter alia the page number and the line number of the transmitted teletext pages.

In this connection it is to be noted that for the transmission of the teletext data a special mode of transmission is employed, which is termed magazine transmission. In this mode of transmission the individual teletext page are respectively associated with certain magazines. In this respect there are two different transmission modes, i. e. a transmission mode, in which the magazines are serially transmitted, and a transmission mode, in which the magazines are transmitted in parallel. In serial transmission only one teletext page is open at a time, whereas during parallel transmission of the magazines up to eight teletext pages may be open at a time. The control information, which is transmitted for each page, hence also contains the magazine number, that is to say, an indication as to which magazine the respectively transmitted teletext page belongs. The control information also contains a cue indicating whether parallel or serial magazine transmission is being employed. This information is made available by the separating stage and supplied to a control unit 16 and furthermore an address generator 18. The information relating to the magazines is employed by the control unit 16 and the address generator 18 to place in a page number memory 20 that address, at which the page numbers of the open teletext page are stored. At an input 22 the number memory receives the address produced by the address generator 18 and at an input 24 the control unit 16 transmits the page numbers of the teletext pages which have just been opened to the page number memory 20.

The information belonging to the individual pages is stored together with line numbers of the transmitted lines in a data memory 26. This data memory 26 receives the data via the line 25 from the separating stage 14, and storage takes place at an address produced by the address generator 28 under the control of the control unit 16. Since the control unit 16 coordinates the storage of the page numbers in the page number memory 20 with the storage of the data in the data memory 26, proper association between the page numbers and the associated data lines is always ensured.

From a component (not illustrated), which is present in every conventional teletext decoder, an additionally provided page acquisition memory 30 receives those page numbers, which are to be sought by the decoder so that the same may be displayed on the television screen. The control unit 16 determines where such page numbers are to be stored, said unit 16 being informed respectively about the sought page numbers. The cue for the end of a page is also stored in this page acquisition memory 30 in a manner associated with the respective page.

The teletext data to be displayed of the television screen are provided at the output 32 of the data memory 26 and supplied to means for processing them.

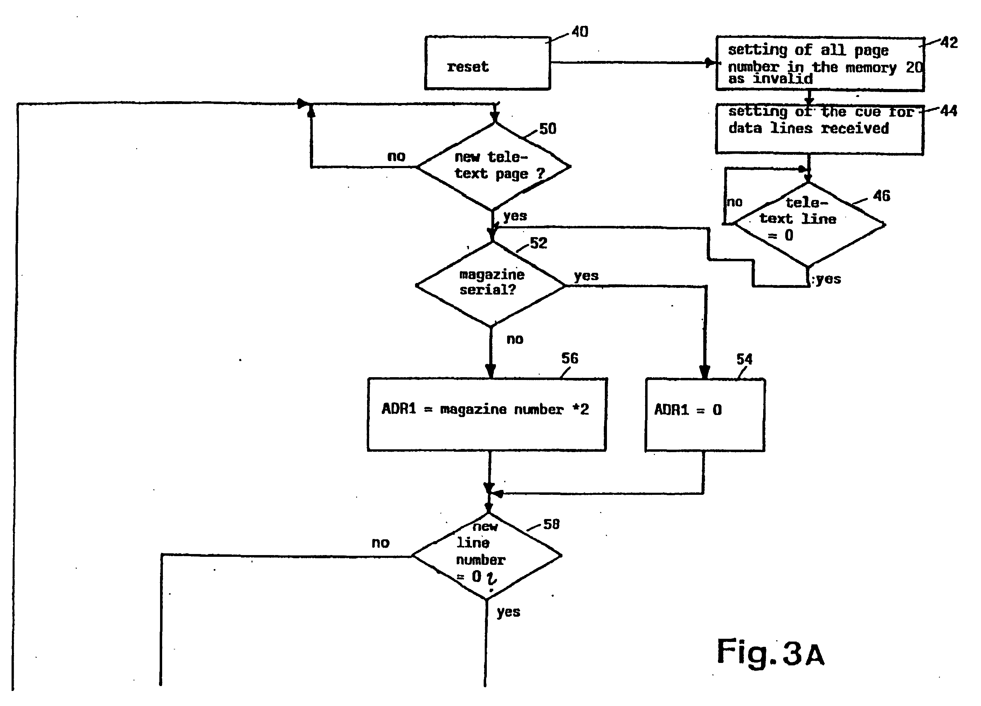

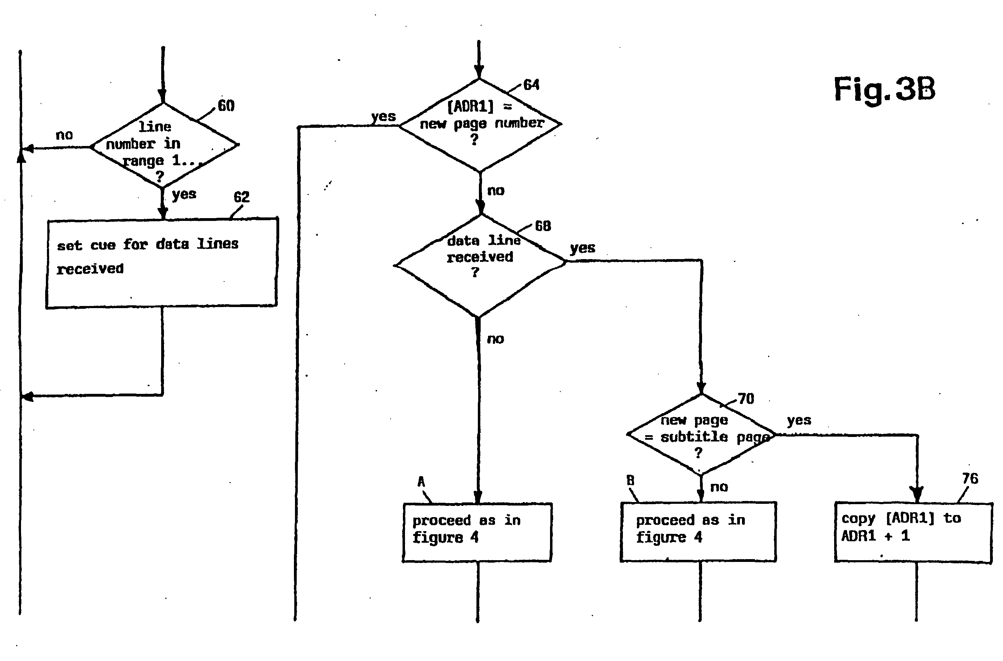

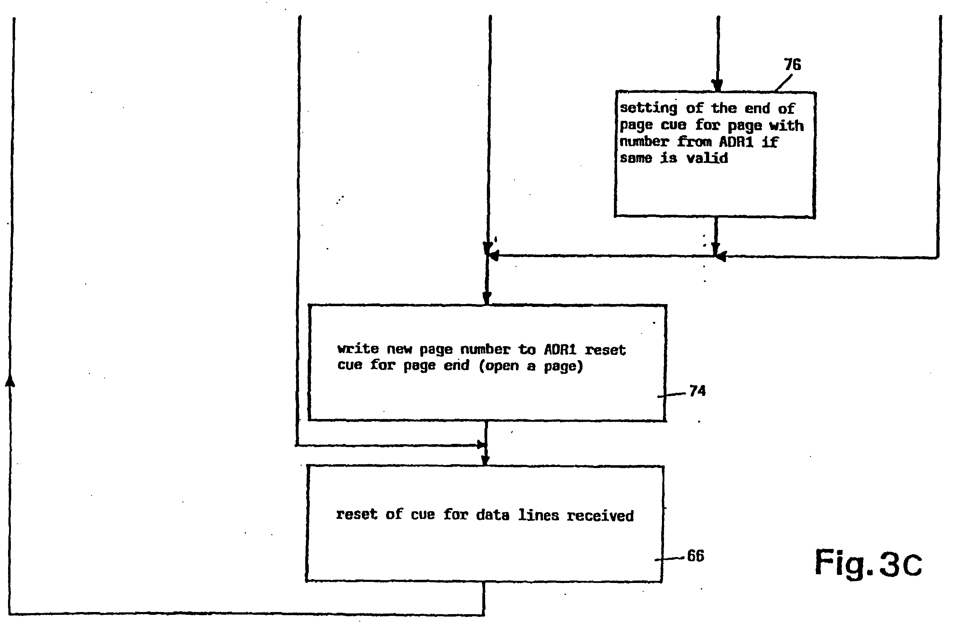

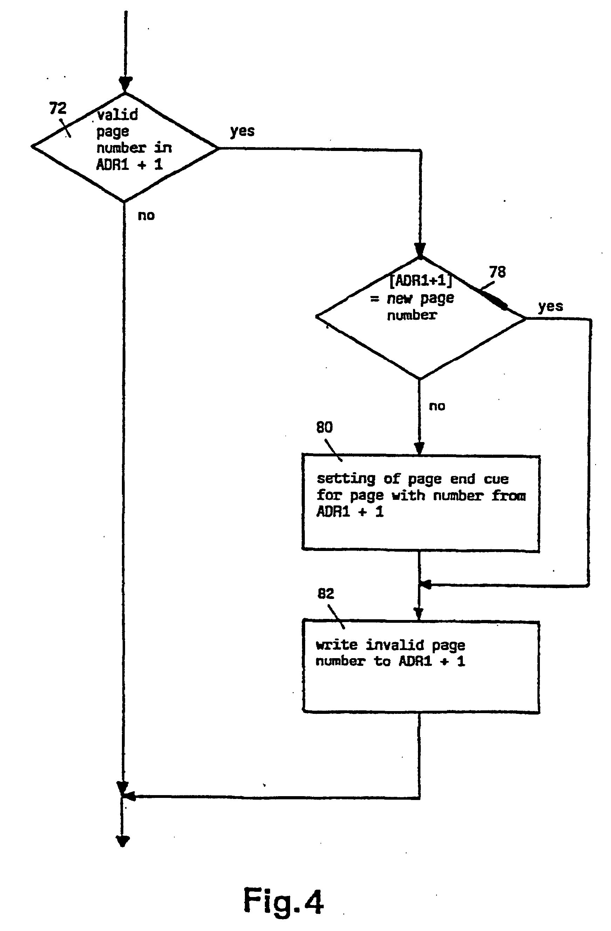

Using the flow chart depicted in figures 3A, 3B, 3C and 4 the function of the teletext decoder will be explained which is here to be described.

On putting the teletext decoder, which is to be described, into operation an initialization process (steps 40 through 46) is performed, in which invalid page numbers (step 42) are stored in the memory 20 at the address ADR1 to ADR6; furthermore during such initialization procedure the cue for received data lines is set for all pages which indicates that since the reception of the last header line data lines have been received (step 44). Before the algorithm can be implemented further, the system waits for a header line in order to ensure identical start conditions.

The sequence of operations performed in the control unit 16 starts at the step 50 with an examination to see whether a new teletext line has been received. As long as no new line is received, the system dwells in a wait loop. On the reception of a new line the loop is abandoned and in the step 52 a check is performed to see whether serial or parallel magazine transmission is taking place. If serial magazine transmission is being carried out, an address pointer ADR1 for the page number memory 20 is set at the value of "0". If on the contrary parallel transmission is detected, then for the production of the memory address in the page number memory 20 the magazine number is multiplied by 2. Accordingly it is possible to ensure that in the case of serial transmission in all cases only one page can be opened in the eight magazines conventionally present. In the case of parallel transmission on the contrary up to eight pages can be opened. After the calculation of the memory addresses for the memory 20 in the steps 54 and, respectively, 56 a check is made in step 58 to see whether the newly received data line has the line number 0. Should the new line number possess a value other than 0, then in the step 60 (figure 3B) a check is made to see whether the line number is between 1 and 24. If this is not the case, then there is no valid line number and the system goes back to the step 50. If a valid line number is present in the range 1 through 24, then in the step 62 a cue is set to indicate that data lines have already been received for the page indicated by the received page number.

As has been explained above, during the initialization operation the cue is set for received data lines, although no data lines have so far been received.

However if the check of the line number in step 58 shows that the line number has the value 0, then this will mean that a header line has been received. In the step 64 a check is now made to see whether the page number stored in the memory 20 at the address ADR1 is the same as the currently received new page number. The first time the system goes through the sequence of operations indicated in the flow chart there is an invalid page number at the address ADR1 of the memory 20 so that checking in step 64 will lead to a negative result. If during further operation of the system the received page number is identical to the page number at the address ADR1, then this header line will be treated as a so-called full header line which does not cause any storing operations but rather has the effect of returning the system to step 50, after, in step 66, the cue for the data lines already received has been reset.

Full header lines, that is to say directly sequential header lines with the same page number, are transmitted for reasons of compatibility to enable older types of teletext decoders to operate correctly. Such older types of teletext decoder in fact require a certain interval to elapse between the reception of a header line and the following data lines in order to clear the memory part in which the data lines are to be written.

Following this a check is made in step 68 to see whether data lines have already been received for this page. Since, as noted supra, during initialization the cue for the received data lines has been set, there is now in a step 70 a check as to whether the new page received is a subtitle page. This may be detected on the basis of a bit comprised in the header line. Since in the case assumed the new page is not marked as a subtitle page, there is then a further sequence of operations B, which is depicted in figure 4.

Firstly in this sequence of operations a check is made in step 72 to see whether a valid page number has been stored in the address ADR1 + 1 in the memory 20. Owing to the preceding initialization there is no valid page number at this address so that the number of the currently received page is stored at the address ADR1 in the memory 20 and the cue which marks the end of a page, is reset, this meaning that the page belonging to the received page number is marked as being opened. This takes place in step 74 (figure 3C). In the following step 66 the cue for received data lines is reset and there is a return to step 50 (figure 3A).

When now data lines are received a check is made in step 58 as to whether the respectively received line number has the value of 0. Since this is not the case with data lines, a check is made in step 60 firstly to see whether the line number is within the valid range of 1 through 24. Should this apply, the cue is set for data lines received. The storage of the received data lines in the memory 30 may now take place.

When now in the serial sequence of data, which are received by the teletext decoder, in step 50 the start of a new page is detected, the system goes through the steps 52, 54 or 56 and 58. On the reception of a new header line the check in step 58 is answered affirmatively, and the sequence of operations noted above is performed over again, as takes place if the newly received page number is not the same as the page number stored at the address ADR1.

In the case of a normal transmission without inserted subtitle pages, it will be found in step 68 that data lines have already been received so that there is a transition to step 70. The check performed in this step 70 has a negative result and there is a transition to the sequence B of operations, which is depicted in figure 4. In this sequence of operations a check is made in step 72 as to whether a valid page number is stored in the memory 20 at the address ADR1 + 1. Should this not be the case, there is a transition to step 76, in which the page end cue for the previously received page is set, whose page number is stored at the address ADR1. Following this the new page number is stored at the address ADR1 and the page cue for this new page is reset, this meaning that this page is deemed to be opened. After resetting of the cue for the data lines received in step 66 there is a return to the step 50 in figure 3A.

The sequence of operations so far described applies for the case in which the teletext pages are received in sequence without there being any subtitle page in them. The case will be now described in which a subtitle page is comprised in the data flow of the teletext pages, such subtitle page however not interrupting a teletext page. This case is illustrated in figure 1A.

If now in the page sequence depicted in figure 1A the header line of the page 150 is received, then there will be the page number 101 at the address ADR1 in the memory 20, the cue of the received data header lines is set and the page end code is reset.

Performing a check on the basis of the received page number in step 58 will show that the received line is a header line. In step 64 it will be seen that the page number comprised in the header line is not the same as the page number stored at the address ADR1. Since the cue for data lines received is set, the check in step 68 will have a positive result so that a check is made in step 70 to see whether the new page is a subtitle page. The respective question will be answered affirmatively, since, as indicated supra, the received header line is to be the header line of a subtitle page. In step 76 the page number stored at the address ADR1 in the memory 20 will be copied to the address ADR1 + 1. The newly received page number, that is to say the pump number 150, is stored at the address ADR1 and the page end cue for the page 150 will be reset, this corresponding to the opening of this page (step 74). In the step 66 the cue for data lines received is reset again and the sequence of operations then reverts to the step 50. There will then be such the state that both the subtitle page with the page number 150 and also the teletext page with the page number 101 are marked as being opened.

Owing to the reception of the data belonging to the subtitle page, the branch of the flow chart comprising the steps 60 and 62 is run through, something which leads to the setting of the cue for data lines received.

Following the subtitle page in accordance with figure 1A the header line of the teletext page 102 is received. The fact that it is here a question of a header line is detected in step 58. In step 64 it will be seen that the newly received page number 102 is not the same as the page number 150, which was stored at the address ADR1. Since the cue for received data lines is set, after the finding that the new page is not a subtitle page (step 70) there will be a transition to the sequence of operations illustrated in figure 4. In step 72 it will be detected that a valid page number, that is to say in this case the page number 101, is stored at the address ADR1 + 1. This is always the case, if the previously received page was a subtitle page.

A check is made in step 78 as to whether the page number 101 at the address ADR1 + 1 is the same as the new page number 102. Since this is not the case, it is then possible in step 80 to set the page end cue for the page indicated by the page number at the address ADR1 + 1, that is to say for the page 101, and this page can therefore be marked as being closed. In step 82 an invalid page number is written at the address ADR1 + 1. In step 76 the end cue of the page is set, whose number is stored at the address ADR1, i. e. of the page 150. In the step 74 (figure 3C) the new page number (the number 102) is stored at the address ADR1 and the page end cue of this page is reset, something corresponding to the opening of this page. In the step 66 the cue for data lines received is reset and there is a return to the step 50.

Owing to the reception of the data lines belonging to the teletext page 102 the system will pass through the branch comprising steps 60 and 62 of the flow chart, something leading to the setting of the cue for data lines received.

If in the sequence of the pages received a subtitle page is included, which interrupts the transmission of a normal teletext page, this corresponding to the case illustrated in figure 1B, it is then necessary, by performing sequence of operations which is represented by the flow chart in figures 3A, 3B, 3C and 4, to ensure that the interrupted teletext is only marked as being terminated, when all data lines for this page have been received.

Let it be assumed that at the point marked by the arrow in figure 1B the header line of a subtitle page is being transmitted, which interrupts the transmission of the preceding teletext page with the page number 101. The steps in the flow chart of figures 3A, 3B, 3C and 4 are then performed in the same fashion as during the reception of a subtitle page, which does not interrupt the preceding page; this difference only makes itself felt when following the subtitle page a normal teletext page is transmitted again. In fact such teletext page will again be teletext page, partly transmitted prior to the subtitle page, bearing the number 101. After performance of the check in steps 64 and 68 the next step in the sequence of operations will in this case be the step 70, in which the system will detect that the newly transmitted page bearing the number 101 is not a subtitle page. It is only after starting the sequence of operations in figure 4 that the system will detect that at the address ADR1 + 1 a valid page number, in the example described the page number 101, is stored. In the step 78 it will be detected that the page number stored at the address ADR1 + 1 is the same as the newly received page number, that is to say also the page number 101. The consequence of this is that the step 80 is skipped, that is to say the page end cue for the page with the number 101 is not set. At the address ADR1 + a in step 82 an invalid address will be written and in step 76 the page end code cue for the page will be set at the address ADR1 + 1, that is to say the subtitle page with the number 150. In the step 74 the new page number, i. e. the number 101, will be stored at the address ADR1 and the page end cue for such page reset. Furthermore the cue for data lines received will be reset in step 66. This cue will however always be set again, if lines are received, which have a line number different than 0, this being recognized in step 58. The setting of the cue for data lines received respectively takes place in step 62, if the line number is within the valid range of 1 to 24.

We will now have a state in which both the subtitle page with the number 150 and also the page with the number 101 are opened.

When after the reception of the data lines for the page 101 the header line of the page 102 is received, the consequence will be that, after steps 70, 72 and 76 have been executed, the subtitle page with the number 150 and the teletext page with the number 101 will be closed and the new page number 102 will be stored at the address ADR1, this being accompanied by the opening of this page 102 (step 74).

It has thus been shown that even if the subtitle page has interrupted a normal teletext page, such interrupted page will only be marked as terminated, when it has been again completely transmitted after the subtitle page.

As we have already seen, figure 1C shows a transmission sequence in accordance with the pre-header line method. In this method - before a complete teletext page with the associated header line and the data lines - a further header line without the associated data lines is transmitted, which possesses the page number of that teletext page, which as transmitted following the completely transmitted teletext page. The particular feature of this manner of transmission is to be seen in that two header lines always follow each other directly without data lines being transmitted between them. This fact is taken into account in the sequence of operations depicted in figures 3A, 3B, 3C and 4 since there is a respective interrogation as to whether data lines are contained between two header lines. Since this is not the case with the direct succession of two header line, as for example the header lines 101 and 100 or the header lines 102 and 101 in accordance with figure 1C, there is a direct transition to the sequence of the operations in figure 4. After the reception of the first of the two directly sequential header lines there is no setting of an end of page cue, and instead of this in step 74 a new page is marked as being opened, i. e. the page with the number of the first of the two directly adjacent, following header lines.

After the reception of the second of the two directly following, adjacent header lines, data lines are received so that the question in step 68 must be answered affirmatively. If now in the step 70 it is found that the new page is not a subtitle page, events take place as in figure 4, which are directly followed by step 76, in the case of which the end of page cue is set for the page with the number at the address ADR1. If for example the transmission section with the header line of the page 102, of the header line with the page 101 and with the following data lines for the page 101 are examined it will be seen that after reception of the data lines for the page 101 in step 76 the page 100 will be marked as being terminated.

In the example of figure 1C the reception of a subtitle page is just like the reception of a normal teletext page but with the difference that no page previously transmitted page is marked as being terminated, since owing to the affirmative reply in step 70 the path via the step 76 is taken leaving out the step, in which the setting of the end of page cue took place. This means that after this sequence of operations three pages are marked as being open after the header line of the subtitle page is received. In the example of figure 1C it is for example a question of pages with the numbers 101, 102 and 150. Only after the reception of the complete subtitle page with the data lines belonging thereto, and the reception of a new header line, does the termination of a preceding page take place, in the present example, page 101.

If in the case of figure 1D a subtitle page interrupts a transmitted teletext page, then in principle there is the sam sequence of operations as in the case of figure 1C, but with the distinction that after the complete transmission of the subtitle page there will be a negative result of the check in step 78 and then in step 78 it will be seen that the page number stored at the address ADR1 + 1 is in agreement with the currently received page number. This is an indication that a teletext page has been transmitted once again so that it may not be marked as being closed. This is because in this case the step 80 of figure 8 may be omitted. In this case as well after the reception of the header line of the subtitle page three pages are opened, i. e. the pages 100, 101 and 150. Page 100 is only marked as being terminated when after transmission of the subtitle page a header line is received again, in the present example the header line of the page 102 is received. Following this header line the header line of the page 101 is received, which is followed by the data lines of this page so that the previously interrupted teletext page is now transmitted in full.

Thus it has been possible to show that in all possible transmission sequences and events during transmission with without intervening subtitle pages a cue can be produced, with which the transmitted pages may be marked as being terminated. Unnecessary wait times, which would otherwise have to occur, or loss of data owing to incompletely transmitted pages can consequently be avoided.

## Claims

1. A teletext decoder for processing teletext and subtitle information transmitted in a vertical blanking interval of a television signal in the form of pages to be displayed on a screen, each transmitted page having a page header line including information concerning the type and number of the respective page and of a varying number of data lines, which teletext decoder comprises:-
a control unit (16) for receiving-the incoming information and, dependent on the content of the header line controlling the storage of the information belonging to a page in a memory (20;30;26); and
**characterised in that** said teletext decoder further comprises:
an additional memory (20) for storage of page numbers relating to said transmitted pages of information, the control unit (16) being operable to cause a previously received page number to be stored in said additonal memory (20) upon determining that a transmitted page is a subtitle page, said control unit (16) further being operable to mark a previously received page as terminated, if a previously received page is not a subtitle page and the additional memory (20) is not storing a valid page number or is storing a page number differing from that last received.

2. The teletext decoder of claim 1 further comprising:
a synchronisation and conversion unit (12).

3. The teletext decoder of claim 1 or claim 2 further comprising:
an address generator (28) for addressing the memory (26).

4. The teletext decoder of any preceding claim further comprising:
a second address generator (18) for addressing the additional memory (20).

5. A teletext decoder according to any of claims 1 to 4, which teletext decoder comprising means for generating a television picture including teletext and subtitle information.

6. A method of processing teletext and subtitle information transmitted in a vertical blanking interval of a television signal in the form of pages to be displayed on a television screen, which method comprises:
receiving a page including a page header including information concerning the type and number of the respective pafe and having a varying number of data lines at a control unit (16);
storing the information in a memory (20;30;26) in dependence on the page header;
determining if said page is a subtitle page;
and **characterised in that** said method further comprises the steps of :
storing a previously received page number in an additional memory (20) where said previously received page has been determined during said determining step to be a subtitle page; and
marking a previously received page. as terminated if the previously received page is not a subtitle page and the additional memory is not storing a valid page number or is storing a page number differing from that last received.

7. The method of claim 6 further comprising:
synchronising and converting said received incoming information with synchronisation and conversion means (12) prior to performing the step of receiving said incoming information at a control unit (16).

8. The method of claim 6 or claim 7 further comprising:
addressing the or each memory (20;30;26).

9. A method according to any of claims 6 to 8, which method further comprising:
generating a television picture including teletext and subtitle information.

## Patentansprüche

1. Teletext-Decoder für die Verarbeitung von Teletext- und Untertitelinformationen, die in einem vertikalen Austastintervall eines Fernsehsignals in Form von auf einem Bildschirm anzuzeigenden Seiten gesendet werden, wobei jede gesendete Seite eine Seitenkopfzeile, die Informationen enthält, die den Typ und die Nummer der jeweiligen Seite betreffen, und eine veränderliche Anzahl von Datenzeilen besitzt, wobei der Teletext-Decoder umfaßt:
eine Steuereinheit (16), die die ankommenden Informationen empfängt und in Abhängigkeit vom Inhalt der Kopfzeile die Speicherung der zu einer Seite gehörenden Informationen in einem Speicher (20; 30; 26) steuert; und
**dadurch gekennzeichnet, daß** der Teletext-Decoder ferner umfaßt:
einen zusätzlichen Speicher (20) zum Speichern von Seitennummern, die auf die gesendeten Informationsseiten bezogen sind, wobei die Steuereinheit (16) so betreibbar ist, daß sie bewirkt, daß eine früher empfangene Seitennummer in dem zusätzlichen Speicher (20) gespeichert wird, wenn sie feststellt, daß eine gesendete Seite eine Untertitelseite ist, wobei die Steuereinheit (16) ferner so betreibbar ist, daß sie eine früher empfangene Seite als beendet markiert, wenn eine früher empfangene Seite keine Untertitelseite ist und der zusätzliche Speicher (20) keine gültige Seitennummer speichert oder eine von der zuletzt empfangenen verschiedene Seitennummer speichert.

2. Teletext-Decoder nach Anspruch 1, der ferner umfaßt:
eine Synchronisations- und Umsetzungseinheit (12).

3. Teletext-Decoder nach Anspruch 1 oder Anspruch 2, der ferner umfaßt:
einen Adressengenerator (28) zum Adressieren des Speichers (26).

4. Teletext-Decoder nach einem vorhergehenden Anspruch, der ferner umfaßt:
einen zweiten Adressengenerator (18) zum Adressieren des zusätzlichen Speichers (20).

5. Teletext-Decoder nach einem der Ansprüche 1 bis 4, der Mittel umfaßt, die ein Fernsehbild erzeugen, das Teletext- und Untertitelinformationen enthält.

6. Verfahren zum Verarbeiten von Teletext- und Untertitelinformationen, die in einem vertikalen Austastintervall eines Fernsehsignals in Form von auf einem Fernsehschirm anzuzeigenden Seiten gesendet werden, wobei das Verfahren umfaßt:
Empfangen einer Seite, die einen Seitenkopf, der Informationen bezüglich des Typs und der Nummer der jeweiligen Seite enthält, sowie eine veränderliche Anzahl von Datenzeilen umfaßt, bei einer Steuereinheit (16);
Speichern der Informationen in einem Speicher (20; 30; 26) in Abhängigkeit vom Seitenkopf;
Bestimmen, ob die Seite eine Untertitelseite ist;
und **dadurch gekennzeichnet, daß** das Verfahren ferner die folgenden Schritte umfaßt:
Speichern einer früher empfangenen Seitennummer in einem zusätzlichen Speicher (20), wenn während des Bestimmungsschrittes bezüglich der früher empfangenen Seite festgestellt worden ist, daß sie eine Untertitelseite ist; und
Markieren einer früher empfangenen Seite als beendet, falls die früher empfangene Seite keine Untertitelseite ist und der zusätzliche Speicher keine gültige Seitennummer speichert oder eine von der zuletzt empfangenen verschiedene Seitennummer speichert.

7. Verfahren nach Anspruch 6, das ferner umfaßt:
Synchronisieren und Umsetzen der empfangenen ankommenden Informationen mit Synchronisations- und Umsetzungsmitteln (12) vor der Ausführung des Schrittes des Empfangens der ankommenden Informationen bei der Steuereinheit (16).

8. Verfahren nach Anspruch 6 oder Anspruch 7, das ferner umfaßt:
Adressieren des oder jedes Speichers (20; 30; 26).

9. Verfahren nach einem der Ansprüche 6 bis 8, das ferner umfaßt:
Erzeugen eines Fernsehsignals, das Teletext- und Untertitelinformationen enthält.

## Revendications

1. Décodeur de télétexte pour le traitement d'une information de télétexte et de sous-titre, transmise dans un intervalle de suppression verticale (26) d'un signal de télévision sous la forme de pages devant être affichées sur un écran, chaque page transmise possédant une ligne d'en-tête de page incluant une information concernant le type et le numéro de la page respective, et comportant un nombre variable de lignes de données, lequel décodeur de télétexte comprend:
une unité de commande (16) servant à recevoir L' information arrivante et, en fonction du contenu de la ligne d'en-tête, à commander la mémorisation de l'information faisant partie d'une page dans une mémoire (20; 30; 26), et
**caractérisé en ce que** ledit décodeur de télétexte comporte en outre:
une mémoire additionnelle (20) servant à mémoriser des numéros de pages concernant lesdites pages d'information transmises, l'unité de commande (16) pouvant fonctionner de manière à mémoriser un numéro de page reçu précédemment dans ladite mémoire additionnelle (20) lorsqu'il a été déterminé qu'une page transmise est une page de sous-titre, ladite unité de commande (16) pouvant en outre fonctionner de manière à marquer une page reçue précédemment comme étant terminée si une page reçue précédemment n'est pas une page de sous-titre, et si la mémoire additionnelle (20) ne mémorise pas un numéro de page valable ou un numéro de page qui diffère du dernier numéro de page reçu.

2. Décodeur de télétexte selon la revendication 1, comportant en outre:
une unité de synchronisation et de conversion (12).

3. Décodeur de télétexte selon la revendication 1 ou la revendication 2, comprenant en outre:
un générateur d'adresses (28) servant à adresser la mémoire (26).

4. Décodeur de télétexte selon l'une quelconque des revendications précédentes, comprenant en outre:
un second générateur d'adresses (18) pour adresser la mémoire additionnelle (20).

5. Décodeur de télétexte selon l'une des revendications 1 à 4, lequel décodeur de télétexte comprend des moyens pour produire une image de télévision incluant un télétexte et une information de sous-titre.

6. Procédé de traitement d'une information d'un télétexte et de sous-titre-transmis dans un intervalle de suppression verticale d'un signal de télévision sous la forme de pages devant être affichées sur un écran de télévision, lequel procédé comprend:
recevoir une page incluant un en-tête de page incluant une information concernant le type et le numéro de la page correspondante et possédant un nombre variable de lignes de données dans une unité de commande (16);
mémoriser l'information dans une mémoire (20; 30; 26) en fonction de l'en-tête de page;
déterminer si ladite page est une page de sous-titre;
et **caractérisé en ce que** ledit procédé comprend en outre les étapes consistant à:
mémoriser un numéro de page reçu précédemment dans une mémoire additionnelle (20), ladite page reçue précédemment ayant été déterminée pendant ladite étape de détermination comme étant une page de sous-titre; et
marquer une page reçue précédemment comme étant terminée si la page reçue précédemment n'est pas une page de sous-titre et si la mémoire additionnelle ne mémorise pas un numéro de page valable ou un numéro de page qui diffère du dernier numéro de page reçu.

7. Procédé selon la revendication 6, comprenant en outre:
la synchronisation et la conversion de ladite information arrivante reçue avec des moyens de synchronisation et de conversion (12) avant l'exécution de l'étape de réception de ladite information arrivante dans une unité de commande (16).

8. Procédé selon la revendication 6 ou la revendication 7, comprenant en outre:
l'adressage de la ou chaque mémoire (20; 30; 26).

9. Procédé selon l'une quelconque des revendications 6 à 8, lequel procédé comprend en outre:
la production d'une image de télévision incluant une information de télétexte et de sous-titre.
